Europäisches Patentamt

European Patent Office

Office européen des brevets

(11) Numéro de publication: **0 267 846 B1**

# FASCICULE DE BREVET EUROPEEN

(45) Date de publication de fascicule du brevet:
**11.09.91**

(51) Int. Cl.5: **G21C 3/32**

(21) Numéro de dépôt: **87402452.4**

(22) Date de dépôt: **30.10.87**

(54) **Procédé de gestion du coeur d'un réacteur nucléaire à eau pressurisée.**

(30) Priorité: **03.11.86 FR 8615283**

(43) Date de publication de la demande:
**18.05.88 Bulletin 88/20**

(45) Mention de la délivrance du brevet:
**11.09.91 Bulletin 91/37**

(84) Etats contractants désignés:
**BE CH DE ES GB IT LI**

(56) Documents cités:
**DE-A- 1 814 641**
**FR-A- 2 016 901**
**FR-A- 2 552 921**
**US-A- 3 432 389**

(73) Titulaire: **ELECTRICITE DE FRANCE Service National**
**2, rue Louis Murat**
**F-75008 Paris(FR)**

(72) Inventeur: **Malhouitre, Guy**
**67, rue de Tocqueville**
**F-75017 Paris(FR)**
Inventeur: **Israel, Mathieu**
**18, rue André Theuriet**
**F-92340 Bourg La Reine(FR)**
Inventeur: **Gambier, Gérard**
**113, rue de Clairefontaine**
**F-78120 Rambouillet(FR)**

(74) Mandataire: **Mongrédien, André et al**
**c/o BREVATOME 25, rue de Ponthieu**
**F-75008 Paris(FR)**

EP 0 267 846 B1

# Description

L'invention concerne un nouveau procédé permettant de gérer le coeur d'un réacteur nucléaire à eau pressurisée, lorsque ce coeur est formé à la fois d'assemblages à oxyde d'uranium UO₂ et d'assemblages à oxyde mixte d'uranium et de plutonium UO₂-PuO₂.

Dans les réacteurs nucléaires à eau pressurisée, le coeur du réacteur est formé actuellement d'assemblages comportant des crayons contenant des pastilles d'oxyde d'uranium UO₂. Dans un réacteur de 900 MW on trouve 157 assemblages contenant chacun 264 crayons.

La solution actuellement la plus courante pour assurer la gestion du coeur d'un tel réacteur consiste à renouveler le tiers des assemblages et à effectuer en même temps un réarrangement des assemblages restants, à la fin de chaque cycle d'irradiation, dont la durée est, par exemple, d'environ un an. Chacun des assemblages subit ainsi trois cycles d'irradiation avant d'être déchargé du coeur. La gestion du coeur s'effectue donc à partir d'une quantité élémentaire qui est l'assemblage contenant par exemple 264 crayons dans le cas d'un réacteur de 900 MW.

Dans cette solution utilisée actuellement, chacun des assemblages est formé de crayons contenant des pastilles d'oxyde d'uranium UO₂ qui ont toutes, à la fabrication, la même teneur en uranium 235 (par exemple, 3,25%).

Par ailleurs, on sait que les réactions de fission nucléaire qui se produisent dans le coeur conduisent à transformer une partie de l'uranium 238 en plutonium. Lorsqu'ils sont déchargés du coeur, les assemblages contiennent donc une quantité importante de plutonium qui peut à son tour être utilisé comme combustible nucléaire, après retraitement.

Dans cet esprit, il est envisagé de recycler le plutonium formé dans les assemblages à oxyde d'uranium UO₂ irradiés dans les réacteurs à eau pressurisée, pour réaliser de nouveaux assemblages dont les crayons contiennent un oxyde mixte d'uranium et de plutonium UO₂-PuO₂. De tels assemblages à oxyde mixte UO₂-PuO₂ constitueraient par exemple environ un tiers du coeur d'un réacteur à eau pressurisée, les deux autres tiers étant formés d'assemblages classiques à oxyde d'uranium UO₂.

Pour des raisons liées aux propriétés physiques différentes de l'uranium et du plutonium, des points chauds pourraient se produire dans le coeur si les assemblages à oxyde mixte UO₂-PuO₂ présentaient une concentration uniforme en plutonium. Cette solution nouvelle fondée sur le recyclage du plutonium suppose donc que les assemblages à oxyde mixte d'uranium et de plutonium soient divisés, depuis leur centre vers leur périphérie, en plusieurs zones de concentrations différentes en Pu. Ces assemblages peuvent être constitués par exemple de trois zones concentriques formées de crayons contenant des pastilles d'oxyde mixte U O₂-PuO₂ dont la concentration en plutonium va en décroissant de la zone centrale vers la zone périphérique.

Il est donc envisagé d'équiper environ un tiers du coeur des réacteurs nucléaires à eau pressurisée de tels assemblages formés de trois types de crayons contenant des pastilles d'oxyde mixte U O₂-PuO₂ présentant une concentration en plutonium différente. Comme les autres assemblages, seul un tiers de ces assemblages serait remplacé à chaque cycle, de telle sorte que leur durée totale d'irradiation serait également de trois cycles. Comme dans la technique actuelle de gestion du coeur, la quantité élémentaire à laquelle s'intéresse la gestion est donc ici encore l'assemblage pris dans son ensemble.

Cette solution nouvelle, qui présente l'avantage essentiel de permettre le recyclage du plutonium, a cependant des inconvénients.

Ainsi, à la fin de chaque cycle d'irradiation, de nouveaux assemblages à oxyde mixte UO₂-PuO₂ formés d e crayons de types différents (par exemple trois) doivent être introduits dans le coeur. Cela suppose la fabrication, pour chacun de ces assemblages neufs, de crayons présentant différentes concentrations en plutonium. Par conséquent, le coût de fabrication de ces assemblages serait élevé.

Par ailleurs, pour éviter qu'une rupture de gaine dans l'un des crayons d'un assemblage ne nécessite le déchargement de cet assemblage hors du coeur du réacteur, et aussi pour faciliter les opérations de démantèlement des assemblages, on a développé ces dernières années des assemblages démontables, dans lesquels les crayons peuvent être remplacés sans destruction de l'ossature de l'assemblage. On citera par exemple les assemblages du type AFA (Assemblage Français Avancé), décrits aux pages 546 à 549 dans l'ouvrage "Les réacteurs nucléaires à eau ordinaire" rédigé sous la direction de Guy DREVON, dans la collection du Commissariat à l'Energie Atomique, et publié par Eyrolles en 1983.

La présente invention a pour objet un nouveau procédé de gestion du coeur d'un réacteur nucléaire à eau pressurisée, constitué en partie d'assemblages à oxyde mixte UO₂-PuO₂ formés de plusieurs zones concentriques à enrichissement différent, ce procédé permettant, en dehors du premier chargement du coeur, de fabriquer un seul type de crayons contenant des pastilles d'oxyde mixte U O₂-PuO₂ à enrichissement unique, en utilisant des assemblages démontables.

Conformément à l'invention, cet objectif est atteint grâce à un procédé de gestion du coeur d'un réacteur à eau pressurisée, formé d'assemblages démontables comportant chacun un faisceau de crayons contenant des pastilles de matière fissile, ce procédé étant caractérisé en ce qu'il consiste :

- à placer initialement dans le coeur au moins un premier type d'assemblages dont les crayons contiennent des pastilles d'oxyde d'uranium et un deuxième type d'assemblages dont les crayons contiennent des pastilles d'oxyde mixte d'uranium et de plutonium, les crayons des assemblages de ce deuxième type étant répartis selon au moins deux zones concentriques contenant des pastilles d'oxyde mixte à concentrations en plutonium différentes, ces concentrations allant en diminuant vers l'extérieur des assemblages, depuis une zone centrale vers une zone périphérique,
- à faire subir à ces assemblages des cycles d'irradiation successifs, et
- à transférer périodiquement, après chacun de ces cycles d'irradiation, les crayons de chaque zone des assemblages du deuxième type dans la zone adjacente vers l'extérieur de ces assemblages, les crayons situés dans la zone périphérique étant déchargés et des crayons neufs contenant des pastilles d'oxyde mixte à concentration en plutonium égale à la concentration en plutonium des pastilles contenues dans les crayons placés initialement dans la zone centrale étant chargés dans cette zone centrale.

Bien entendu, ce procédé se superpose au procédé de gestion habituel du coeur d'un réacteur à eau pressurisée. Ainsi, la gestion interne de chacun des assemblages à oxyde mixte qui s'effectue à la fin de chaque cycle, conformément à l'invention, s'accompagne d'une gestion globale de l'ensemble des assemblages du coeur. Plus précisément, une partie des assemblages à oxyde d'uranium est renouvelée à chaque cycle et les autres assemblages, qu'ils soient à oxyde d'uranium ou à oxyde mixte d'uranium et de plutonium, sont réarrangés dans le coeur afin d'obtenir une répartition de puissance aussi homogène que possible. Cette gestion globale des assemblages est en elle-même classique et ne fait pas partie de l'invention.

Le procédé selon l'invention permettant de gérer la répartition des crayons dans les différentes zones des assemblages à oxyde mixte $UO_2$-$PuO_2$ présente des avantages notables.

En premier lieu, au cours de la vie du réacteur, un seul type de crayons contenant des pastilles d'oxyde mixte $UO_2$-$PuO_2$ à enrichissement unique doit être fabriqué. Les coûts de fabrication s'en trouvent sérieusement réduits.

De plus, tous les crayons contenant des pastilles d'oxyde mixte $UO_2$-$PuO_2$ passent successivement dans les différentes zones des assemblages qu'ils constituent. Ils intègrent donc une irradiation très voisine, ce qui permet d'envisager une meilleure utilisation de la matière nucléaire. Les propriétés moyennes de ces assemblages évoluant peu tout au long de leur vie, la gestion globale du coeur s'en trouve également facilitée.

Par ailleurs, ce procédé permet de gérer indépendamment les crayons à oxyde mixte et le squelette des assemblages correspondants.

Enfin, compte tenu du caractère non linéaire de l'évolution du facteur de multiplication des neutrons en fonction de la teneur en plutonium (ce facteur restant pratiquement constant au-delà d'une certaine concentration), la quantité de plutonium présente dans le réacteur est diminuée.

Un mode de réalisation de l'invention va maintenant être décrit, à titre d'exemple non limitatif, en se référant aux dessins annexés dans lesquels :

- la figure 1a est une vue en coupe longitudinale représentant de façon très schématique une partie d'un assemblage à oxyde mixte $UO_2$-$PuO_2$ tel qu'il est constitué lorsqu'il est mis en place initialement dans le coeur d'un réacteur nucléaire à eau pressurisée, et

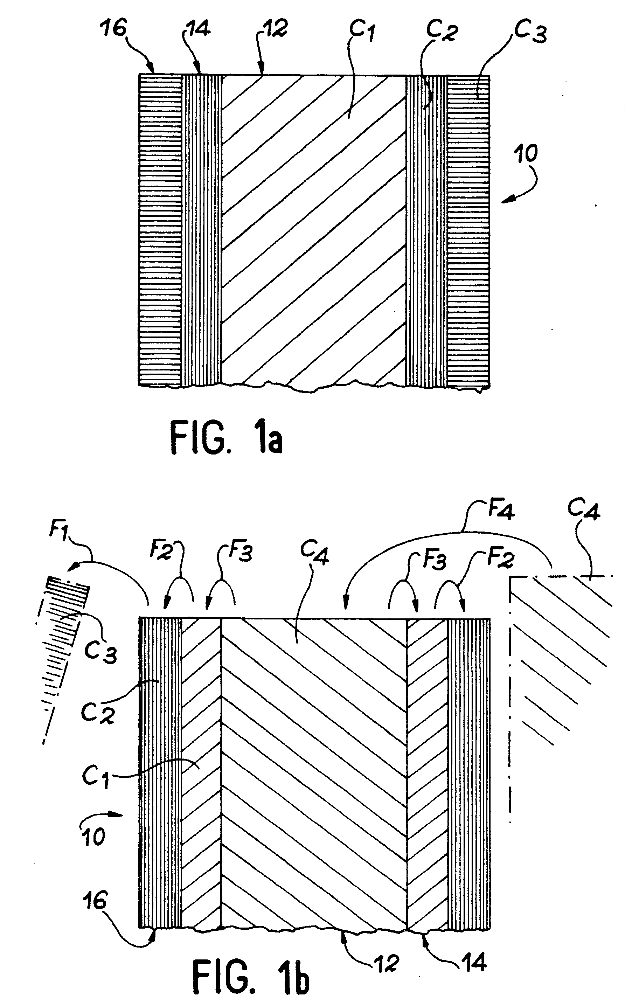

- la figure 1b est une vue comparable à la figure 1a illustrant schématiquement les manutentions des crayons de l'assemblage de la figure 1a effectuées conformément à l'invention, à la fin d'un cycle d'irradiation de cet assemblage.

Dans le procédé selon l'invention, on utilise des assemblages dont la structure mécanique est connue. Aucune description détaillée de cette structure ne sera donc faite.

Pour la bonne compréhension de l'invention, on rappellera simplement ici que les assemblages constituant le coeur des réacteurs nucléaires à eau pressurisée se composent principalement d'une ossature servant à supporter et à positionner un faisceau de crayons combustibles.

L'ossature comprend généralement un embout inférieur, un embout supérieur et des grilles intermédiaires, ces différents éléments étant reliés par des tubes guides. Ces tubes guides servent par ailleurs à recevoir des crayons mobiles appartenant à des grappes remplissant des fonctions diverses, telles que le contrôle de la réaction de fission dans le coeur du réacteur.

Les crayons combustibles supportés par l'ossature comprennent une gaine dans laquelle est logé un empilement de pastilles de combustible nucléaire. La gaine est obturée par des bouchons à ses extrémités.

Généralement, les assemblages des réacteurs à eau pressurisée ont une section carrée. Ils sont disposés verticalement et côte à côte pour former le coeur du réacteur.

Afin de permettre la mise en oeuvre du procédé de gestion de l'invention, ces assemblages sont démontables. Plus précisément, l'embout supérieur peut être séparé du reste de l'ossature, pour assurer le remplacement des crayons combustibles.

De tels assemblages démontables sont connus. Comme on l'a mentionné précédemment, les assemblages du type AFA appartiennent à cette catégorie. D'autres types d'assemblages démontables peuvent toutefois être également utilisés.

Conformément à l'invention, les assemblages constituant le coeur d'un réacteur à eau pressurisée sont de deux types.

Un premier type d'assemblages est constitué de crayons contenant des pastilles d'oxyde d'uranium $UO_2$. Ces assemblages sont identiques à ceux qui sont utilisés actuellement dans la plupart des réacteurs à eau pressurisée. Ils forment par exemple environ les deux tiers du coeur du réacteur.

Un deuxième type d'assemblages formant par exemple le dernier tiers du coeur du réacteur utilise un combustible fabriqué par recyclage du plutonium produit dans les assemblages à oxyde d'uranium, après irradiation. Plus précisément, les crayons de ces assemblages contiennent des pastilles d'oxyde mixte d'uranium et de plutonium $UO_2$-$PuO_2$.

Pour tenir compte de la juxtaposition des assemblages des deux types dans le coeur du réacteur, et afin d'éviter la formation de points chauds, on réalise les assemblages à oxyde mixte d'uranium et de plutonium d'une manière particulière, illustrée par la figure 1a.

Pour simplifier, cette figure, ainsi d'ailleurs que la figure 1b, ne tient pas compte de la structure des assemblages rappelée précédemment. Les zones hachurées correspondent en réalité à des ensembles de crayons combustibles présentant tous, à l'intérieur de chaque zone, une constitution identique. L'ossature n'est pas représentée.

Ainsi, chacun des assemblages à oxyde mixte tel que l'assemblage 10 sur la figure 1a comprend, lors du chargement initial du coeur, plusieurs zones concentriques dans lesquelles la concentration en plutonium des pastilles d'oxyde mixte contenues dans les crayons est différente. Plus précisément, cette concentration va en diminuant depuis le centre de l'assemblage vers sa périphérie, la concentration étant uniforme à l'intérieur de chaque zone.

Dans le mode de réalisation représenté à titre d'exemple sur la figure 1a, l'assemblage 10 comprend trois zones concentriques à concentrations en plutonium différentes. On trouve donc, depuis le centre de l'assemblage vers sa périphérie, une zone centrale 12, une zone intermédiaire 14 et une zone périphérique 16. Les dimensions des zones 12, 14 et 16 sont déterminées de telle sorte que chacune d'entre elles contienne le même nombre de crayons.

Lors du chargement initial du réacteur illustré par la figure 1a, la zone centrale 12 est remplie de crayons neufs identiques $C_1$ contenant des pastilles d'oxyde mixte $UO_2$-$PuO_2$ dont la concentration en plutonium est plus élevée que dans les zones 14 et 16. Dans cette zone 12, la concentration initiale en plutonium peut être, par exemple, d'environ 4%.

De même, la concentration en plutonium des pastilles d'oxyde mixte $UO_2$-$PuO_2$ logées dans les crayons $C_2$ remplissant la zone intermédiaire 14 est supérieure à la concentration en plutonium des pastilles logées dans les crayons $C_3$ remplissant la zone périphérique 16. Dans l'exemple cité précédemment, les concentrations initiales dans les zones 14 et 16 peuvent être respectivement voisines de 3% et de 2%.

Lorsqu'un cycle d'irradiation est terminé, c'est-à-dire par exemple environ un an après le premier chargement du coeur, la concentration en plutonium dans chacune des zones 12, 14 et 16 des assemblages 10 à oxyde mixte d'uranium et de plutonium a baissé. Plus précisément, la concentration en plutonium des crayons $C_1$ situés dans la zone centrale 12 est alors très proche de la concentration initiale dans la zone intermédiaire 14 (environ 3% dans l'exemple cité précédemment). De même, la concentration en plutonium des crayons $C_2$ situés dans la zone intermédiaire 14 est devenue voisine de la concentration existant initialement dans la zone périphérique 16 (environ 2% dans l'exemple cité). Enfin, la concentration en plutonium des crayons $C_3$ situés dans cette zone périphérique 16 a également baissé, pour devenir très inférieure à sa valeur initiale.

Conformément à l'invention, et comme l'illustre très schématiquement la figure 1b, chacun des assemblages 10 à oxyde mixte d'uranium et de plutonium est alors démonté et les opérations suivantes sont effectuée :

- déchargement des crayons $C_3$ situés dans la zone périphérique 16 (flèche $F_1$ sur la figure 1b),
- transfert des crayons $C_2$ de la zone intermédiaire 14 dans la zone périphérique 16 (flèche $F_2$),
- transfert des crayons $C_1$ de la zone centrale 12 dans la zone intermédiaire 14 (flèche $F_3$), et
- chargement de crayons neufs $C_4$ dans la zone centrale 12 (flèche $F_4$).

Les crayons neufs $C_4$ introduits dans la zone centrale 12 des assemblages 10 sont tous identiques et contiennent des pastilles d'oxyde mixte $UO_2$-$PuO_2$ à concentration uniforme en plutonium. Cette concentration est identique à la concentration en plutonium qui existait initialement dans la zone centrale 12. Dans l'exemple cité précédemment, cette concentration est donc d'environ 4%.

Il est à noter que cette concentration est inférieure à la moyenne des concentrations en plutonium dans les crayons d'un assemblage à oxyde mixte qui serait géré uniquement de façon classique. Ainsi, dans l'exemple cité cette moyenne serait d'environ 4,5%, alors que la concentration en plutonium des crayons $C_1$, puis $C_4$ placés dans la zone centrale 12 est d'environ 4%.

A la fin de chaque cycle d'irradiation, les opérations qui viennent d'être décrites en référence à la figure 1b sont renouvelées.

Conformément à l'invention, on réalise donc une gestion de la position des crayons à l'intérieur même des assemblages 10 à oxyde mixte. Cette gestion est réalisée de telle sorte qu'en dehors du chargement initial du réacteur, une seule sorte de crayons contenant des pastilles d'oxyde mixte U $O_2$-$PuO_2$ doit être introduite dans ces assemblages. Le coût de fabrication s'en trouve donc notablement diminué par rapport à une gestion traditionnelle dans laquelle un renouvellement de l'assemblage 10 complet serait effectué. En effet, il faudrait alors fabriquer tout au long de la vie du réacteur plusieurs types de crayons correspondant à chacune des zones des assemblages 10.

Bien entendu, l'invention n'est pas limitée à l'exemple décrit, dans lequel chacun des assemblages 10 est divisé en trois zones concentriques. En effet, le nombre de zones est égal au nombre de cycles d'irradiation subis par les assemblages à oxyde d'uranium. Ainsi, les assemblages à oxyde mixte d'uranium et de plutonium peuvent aussi être formés de deux zones ou, au contraire, d'au moins quatre zones concentriques, selon le nombre de cycles. Le principe de gestion interne de ces assemblages reste alors le même. Ainsi, à la fin de chaque cycle, les crayons contenus dans la zone périphérique sont déchargés et les crayons contenus dans les autres zones sont transférés vers l'extérieur de l'assemblage, dans la zone adjacente à celle qu'ils occupaient précédemment. La zone centrale, qui se trouve ainsi libérée, est ensuite remplie de crayons neufs à enrichissement unique en plutonium.

Comme on l'a déjà mentionné, la gestion selon l'invention de la répartition des crayons à l'intérieur des assemblages à oxyde mixte $UO_2$-$PuO_2$ s'ajoute à la gestion globale des assemblages à l'intérieur du coeur du réacteur. Le principe de cette gestion globale reste inchangé par rapport à la gestion habituelle dans les réacteurs nucléaires à eau pressurisée. On remarquera simplement que l'invention tend à simplifier cette gestion globale puisque les propriétés moyennes des assemblages à oxyde mixte $UO_2$-$PuO_2$, qui constituent par exemple environ un tiers des assembages du coeur, évoluent très peu dans le temps. En effet, ces assemblages sont en quelque sorte remis à neuf à la fin de chaque cycle, alors que les assemblages classiques à l'oxyde d'uranium ne sont renouvelés qu'après trois cycles d'irradiation successifs.

Le procédé de gestion des crayons à l'intérieur des assemblages à oxyde mixte selon l'invention permet aussi de faire passer successivement chacun des crayons dans les différentes zones de ces assemblages. Par conséquent, lorsque ces crayons sont déchargés, ils ont intégré une irradiation très voisine. Cette caractéristique permet d'envisager une meilleure utilisation du combustible par rapport à des assemblages à oxyde mixte qui resteraient dans le coeur pendant trois cycles successifs. En effet, étant donné que le facteur de multiplication des neutrons en fonction de la teneur en plutonium croît de moins en moins rapidement lorsque cette teneur augmente, la concentration en plutonium dans les crayons introduits à chaque cycle dans la zone centrale des assemblages à oxyde mixte est inférieure à la moyenne des concentrations dans un assemblage à oxyde mixte qui resterait dans le coeur pendant plusieurs cycles successifs. Par exemple, si cette moyenne est d'environ 4,5%, une concentration voisine de 4% sera suffisante.

Enfin, il faut noter que l'invention permet de réutiliser l'ossature des assemblages à oxyde mixte pendant un nombre de cycles qui ne dépend que du vieillissement de cette ossature. Cette caractéristique contribue elle aussi à réduire le coût de fabrication.

**Revendications**

1. Procédé de gestion du coeur d'un réacteur à eau pressurisée, formé d'assemblages démontables, comportant chacun un faisceau de crayons contenant des pastilles de matière fissile, ce procédé étant caractérisé en ce qu'il consiste :
   - à placer initialement dans le coeur au moins un premier type d'assemblages dont les crayons contiennent des pastilles d'oxyde d'uranium et un deuxième type d'assemblages (10) dont les crayons ($C_1$, $C_2$, $C_3$) contiennent des pastilles d'oxyde mixte d'uranium et de plutonium, les crayons des assemblages de ce deuxième type étant répartis selon au moins deux zones concentriques (12, 14, 16) contenant des pastilles d'oxyde mixte à concentration en plutonium différente, cette concentration allant en diminuant vers l'extérieur des assemblages, depuis une zone centrale (12) vers une zone périphérique (16),

- à faire subir à ces assemblages (10) des cycles d'irradiation successifs de durée déterminée, et

- à transférer périodiquement, après chacun de ces cycles d'irradiation, les crayons ($C_1$, $C_2$) de chaque zone (12, 14) des assemblages du deuxième type dans la zone adjacente (14, 16) vers l'extérieur de ces assemblages, es crayons ($C_3$) situés dans la zone périphérique (16) étant déchargés et des crayons neufs ($C_4$) contenant des pastilles d'oxyde mixte à concentration en plutonium égale à la concentration en plutonium des pastilles contenues dans les crayons ($C_1$) placés initialement dans la zone centrale (12) étant chargés dans cette zone centrale.

2. Procédé selon la revendication 1, caractérisé en ce qu'on place dans chacune des zones (12, 14, 16) des assemblages (10) du deuxième type le même nombre de crayons ($C_1$, $C_2$, $C_3$, $C_4$).

3. Procédé selon l'une quelconque des revendications 1 et 2, caractérisé en ce que les crayons des assemblages (10) du deuxième type sont répartis selon trois zones concentriques (12, 14, 16).

4. Procédé selon l'une quelconque des revendications 1 à 3, caractérisé en ce que, chacun des assemblages comprenant de plus une ossature démontable supportant les crayons, on change les ossatures des assemblages (10) du deuxième type après un nombre de cycles d'irradiation indépendant du nombre de cycles d'irradiation subis par les crayons ($C_1$, $C_2$, $C_3$, $C_4$) de ces assemblages.

5. Procédé selon l'une quelconque des revendications 1 à 4, caractérisé en ce qu'on renouvelle les assemblages du premier type après un nombre de cycles d'irradiation donné, le nombre de zones (12, 14, 16) des assemblages du deuxième type étant égal à ce nombre de cycles.

## Claims

1. Process for the control of the core of a pressurized water reactor, formed from dismantlable assemblies, each having a group of rods containing fissile material pellets, characterized in that it comprises initially placing in the core at least one first type of assembly, whereof the rods contain uranium oxide pellets and a second type of assembly (10) whose rods ($C_1$, $C_2$, $C_3$) contain mixed uranium and plutonium oxide pellets, the rods of the assemblies of said second type being distributed in accordance with at least two concentric zones (12, 14, 16) containing mixed oxide pellets having different plutonium concentrations, said concentrations decreasing towards the outside of the assemblies from a central zone (12) towards a peripheral zone (16), making these assemblies (10) undergo successive irradiation cycles and periodically transferring, following each of these irradiation cycles, the rods ($C_1$, $C_2$) of each zone (12, 14) of the assemblies of the second type into the adjacent zone (14, 16) towards the outside of said assemblies, the rods ($C_3$) located in the peripheral zone (16) being discharged and new rods ($C_4$) containing the mixed oxide pellets with a plutonium concentration equal to the plutonium concentration of the pellets contained in the rods ($C_1$) initially placed in the central zone (12) being loaded into said central zone.

2. Process according to claim 1, characterized in that the same number of rods ($C_1$, $C_2$, $C_3$, $C_4$) is placed in each of the zones (12, 14, 16) of the assemblies (10) of the second type.

3. Process according to either of the claims 1 and 2, characterized in that the rods of the assemblies (10) of the second type are distributed in three concentric zones (12, 14, 16).

4. Process according to any one of the claims 1 to 3, characterized in that each of the assemblies has a dismantlable structure supporting the rods and the structures of the assemblies (10) of the second type are changed after a number of irradiation cycles which is independent of the number of irradiation cycles undergone by the rods ($C_1$, $C_2$, $C_3$, $C_4$) of said assemblies.

5. Process according to any one of the claims 1 to 4, characterized in that the assemblies of the first type are replaced after a given number of irradiation cycles, the number of zones (12, 14, 16) of assemblies of the second type being equal to said number of cycles.

## Patentansprüche

1. Verfahren zur Handhabung des Kerns eines Druckwasserreaktors, gebildet aus entfernbaren Anordnungen mit jeweils einem Stab- oder Stiftbündel, das Tabletten aus spaltbarem Material enthält, wobei das Verfahren dadurch gekennzeichnet ist, daß es besteht aus:

Ausgangsanordnen wenigstens eines Typs von Anordnungen in dem Kern, dessen Stifte Tabletten aus Uranoxyd enthalten und einen zweiten Typ von Anordnungen (10), dessen Stifte oder Stäbe ($C_1$, $C_2$, $C_3$) Tabletten aus gemischten Oxyden von Uran und Plutonium enthalten, wobei die Stifte der Anordnungen von diesem zweiten Typ in wenigstens zwei konzentrischen Zonen (12, 14, 16) verteilt angeordnet sind, die Tabletten mit Mischoxyden unterschiedlicher Plutoniumkonzentration enthalten, wobei diese Konzentration sich nach außen der Anordnungen hin verringert, ausgehend von einer zentralen Zone (12) zu einer Umfangszone (16),

Unterwerfen dieser Anordnungen (10) aufeinanderfolgender Bestrahlungszyklen von vorbestimmter Dauer, und

periodisches Transferieren, nach jedem dieser Bestrahlungszyklen, der Stifte ($C_1$, $C_2$) einer jeden Zone (12, 14) der Anorndungen vom zweiten Typ in die benachbarten Zone (14, 16) nach dem äußeren dieser Anordnungen, wobei die in der Umfangszone (16) angeordneten Stifte ($C_3$) angebracht werden und neue Stifte ($C_4$), die Tabletten von Mischoxyden mit unterschiedlicher Plutoniumkonzentration enthalten, die gleich der Plutoniumkonzentration der Tabletten ist, die in den Stiften ($C_1$) enthalten ist, die ausgangs in der Mittenzone (12) angeordnet sind, in diese Mittenzone eingebracht werden. gebracht wurden.

2. Verfahren nach Anspruch 1, dadurch gekennzeichnet, daß in jeder der Zonen (12, 14, 16) Anordnungen (10) vom zweiten Typ mit derselben Anzahl von Stiften ($C_1$, $C_2$, $C_3$, $C_4$) angeordnet werden.

3. Verfahren nach Anspruch 1 oder 2, dadurch gekennzeichnet, daß die Stifte der Anordnungen (10) des zweiten Typs über drei konzentrische Zonen (12, 14, 16) verteilt angeordnet sind.

4. Verfahren nach einem der Ansprüche 1 bis 3, dadurch gekennzeichnet, daß eine jede der Anordnungen, die weiterhin eine entfernbare Tragkonstruktion aufweist, die die Stifte stützt, die Tragkonstruktionen der Anordnungen (10) des zweiten Typs nach einer Anzahl von Bestrahlungszyklen gewechselt werden, unabhängig von der Anzahl der Bestrahlungszyklen, der die Stifte ($C_1$, $C_2$, $C_3$, $C_4$) dieser Anordnungen unterworfen wurden.

5. Verfahren nach einem der Ansprüche 1 bis 4, dadurch gekennzeichnet daß die Anordnungen des ersten Typs nach einer Anzahl von vorbestimmten Bestrahlungszyklen erneuert werden, wobei die Anzahl der Zonen (12, 14, 16) der Anordnungen des zweiten Typs gleich dieser Anzahl der Zyklen ist.

FIG. 1a

FIG. 1b